# EUROPEAN PATENT SPECIFICATION

(11) **EP 2 578 440 B1**
(45) Date of publication and mention of the grant of the patent: **28.08.2019**
(21) Application number: 11789539.1
(22) Date of filing: 14.04.2011
(51) Int. Cl.: B60L 15/20

(54) **PLAY-REDUCING CONTROL APPARATUS FOR ELECTRICALLY DRIVEN VEHICLE**
SPIELREDUZIERENDE STEUERVORRICHTUNG FÜR ELEKTRISCH ANGETRIEBENE FAHRZEUGE
APPAREIL DE COMMANDE DE RÉDUCTION DE JEU POUR VÉHICULE ÉLECTRIQUE

(30) Priority: 31.05.2010 JP 2010123780
(43) Date of publication of application: 10.04.2013
(73) Proprietor: NISSAN MOTOR CO., LTD., Yokohama-shi, Kanagawa 221-0023 (JP)
(72) Inventor: NAKAMURA, Yohei, Kanagawa 243-0123 (JP); KAZAMA, Isamu, Kanagawa 243-0123 (JP); YOSHIMURA, Futoshi, Kanagawa 243-0123 (JP)
(74) Representative: Hoefer & Partner Patentanwälte mbB
(86) International application number: PCT/JP2011/059252
(87) International publication number: WO 2011/152129

(56) References cited:
- EP-A1- 2 098 404
- JP-A- 2003 065 106
- JP-A- 2003 065 106
- JP-A- 2007 153 110
- JP-A- 2007 153 110
- JP-A- 2007 236 168
- JP-A- 2007 236 168
- JP-A- 2010 045 899

## Description

### TECHNICAL FIELD

The present invention relates to a play-reducing control apparatus provided in an electrically-driven vehicle such as a battery vehicle which uses only an electric motor as its power source and a hybrid vehicle which runs by use of energy derived from engine and electric motor. More particularly, the present invention relates to a technique that reduces in advance a play (looseness) of a motor transfer system ranging from the electric motor to a drive wheel during a creeping-cut which brings a creep torque of the electric motor to 0.

### BACKGROUND ART

An electrically-driven vehicle drives an electric motor in accordance with a range selected by a shift manipulation which is done by a driver to produce a running mode of the vehicle. By transmitting this power from the electric motor to road-wheels, an electric running can be realized.

When the electrically-driven vehicle is made to run at very low speed (is made to creep) by creep torque with a forward-or-reverse-running range selected as in the case of automatic-transmission vehicle; the electric motor is driven and controlled to output the minute creep torque from the electric motor, and this creep torque is transmitted to the road-wheels to enable the creep running of the electrically-driven vehicle.

For example, Patent Literature 1 proposes a creep-running control technique for an electrically-driven vehicle. In this technique, in addition to enabling the creep running of the electrically-driven vehicle as mentioned above, a creeping-cut which reduces the creep torque of the electric motor down to zero is performed when a predetermined creeping-cut permitting condition is satisfied. This predetermined condition is, for example, that the vehicle is in a stopped state with no intention to start moving the vehicle. Such a creeping-cut is performed because the creep running is not scheduled to be conducted immediately and also because a power consumption can be suppressed.

However, in the case that the creeping-cut is performed as disclosed in Patent Literature 1, the following problem is caused when the creep running is restarted or a normal acceleration for vehicle start is conducted after changing an active shift range from one running range into another running range having its drive direction opposite to that of the one running range.

That is, a play (looseness) produced in a rotational direction (drive direction) exists in a motor transfer system (powertrain) continuous from the electric motor to the drive wheel, due to a backlash of each gear and the like. If one running range which was active just before the execution of creeping-cut has a drive direction opposite to that of another running range selected when trying to restart the creep running or when trying to accelerate the vehicle for normal vehicle start, torque starts to be transmitted after eliminating the play of the motor transfer system when restarting the creep running or when accelerating the vehicle for normal vehicle start. In this case, a problem is caused that shock and abnormal noise such as a gear rattle are generated when completing the elimination of the play of the motor transfer system.

### CITATION LIST

### Patent Literature

Patent Literature 1 : Japanese Patent Application Publication No. 2007-236168

Prior art document JP 2003 065 106 A refers to a power output device and to an electric vehicle which are configured in order to prevent the occurrence of a chatter due to the elimination of play and vibration in a mechanical section transmitting power when breaking in starting the underline vehicle.

Prior art document JP 2007 153110 A discloses a controller for a vehicle driving device which is configured in order to suppress the occurrence of stars delay due to the looseness of the driven system when the driving direction of the vehicle is switched.

### SUMMARY OF THE INVENTION

It is therefore an object of the present invention to provide a play-reducing control apparatus for an electrically-driven vehicle, capable of reducing the play of the motor transfer system to avoid the problem of abnormal noise and shock, by a time at which the creep running is restarted or by a time at which the vehicle is accelerated for the normal vehicle start, even if one running range which was active just before the creeping-cut is opposite to another running range which is active when the creep running is restarted or when the vehicle is accelerated for the normal vehicle start.

### SOLUTION TO PROBLEM

The object underlying the present invention is achieved by a play-reducing control apparatus for an electrically-driven vehicle according to independent claim 1. A preferred embodiment is defined in independent claim 2.

For this purpose, according to the present invention, a play-reducing control apparatus for an electrically-driven vehicle is constructed as follows. At first, the electrically-driven vehicle which is a basic precondition of a main structure according to the present invention will now be explained. This electrically-driven vehicle is configured to run by transmitting power from an electric motor to a road wheel in accordance with a shift range selected by a shift manipulation which is done by a driver to produce a running mode of the vehicle. Moreover, the electrically-driven vehicle is configured to creep at a very low speed by a creep torque derived from the electric motor. Moreover, the electrically-driven vehicle is configured to execute a creeping-cut such that the creep torque of the electric motor is reduced to 0 when a predetermined creeping-cut permitting condition is being satisfied.

For such an electrically-driven vehicle, the play-reducing control apparatus according to the present invention includes a creeping-cut running-range-selection detecting means configured to detect that the creeping-cut permitting condition is being satisfied and also the selected shift range is a running range; and an electric-motor control means configured to control the electric motor such that the electric motor outputs a torque smaller than the creep torque in a drive direction of the running range for a limited period from a timing at which the creeping-cut running-range-selection detecting means detects that the running range is being selected during the satisfaction of the creeping-cut permitting condition.

### EFFECTS OF INVENTION

According to such a play-reducing control apparatus for an electrically-driven vehicle, the electric motor is controlled to output the torque having a level smaller than the creep torque in the direction same as the drive direction of the selected running range, for the limited period from the timing at which two of the requirement that the creeping-cut permitting condition is being satisfied and the requirement that any running range is being selected are satisfied.

The torque having such level and direction which is outputted from the electric motor functions to reduce the play (looseness) during the execution of creeping-cut if there is the play in the motor transfer system. Therefore, the creep running or the normal acceleration for vehicle start is started or restarted without the play after the creeping-cut. Accordingly, the problem that shock and abnormal sound such as gear rattle are caused can be solved.

### BRIEF EXPLANATION OF DRAWINGS

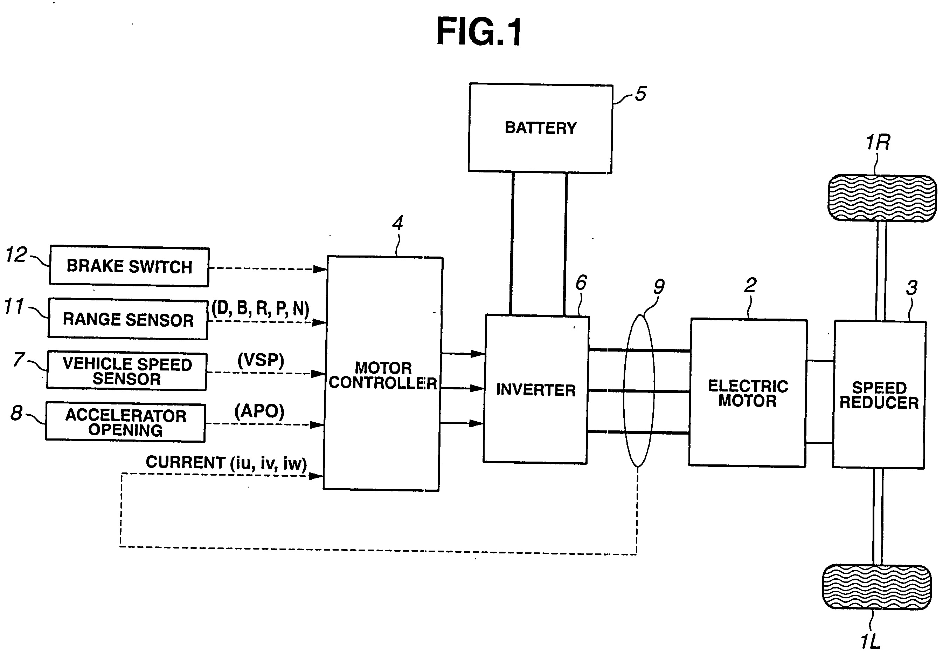

[FIG. 1] A schematic system view showing a drive system and a control system for the drive system in a vehicle equipped with a play-reducing control apparatus in an embodiment according to the present invention

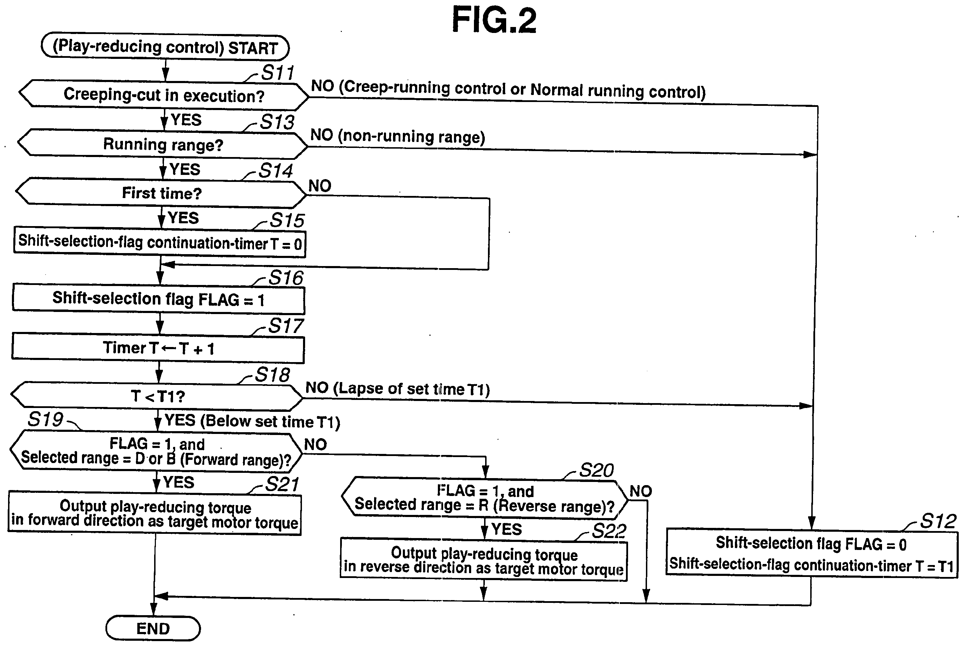

[FIG. 2] A flowchart showing a play-reducing control program which is executed by a motor controller shown in FIG. 1.

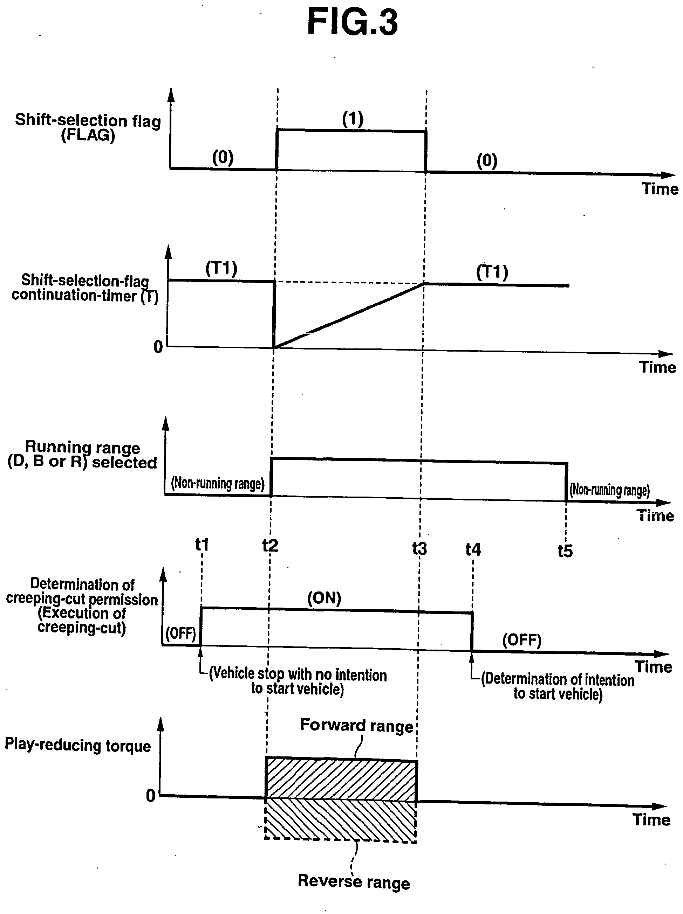

[FIG. 3] An operational time chart obtained by executing the play-reducing control program of FIG. 2, in a case that a shift range is changed from a non-running range to a running range during the execution of creeping-cut, and then the shift range is changed from the running range back to the non-running range after the creeping-cut is finished.

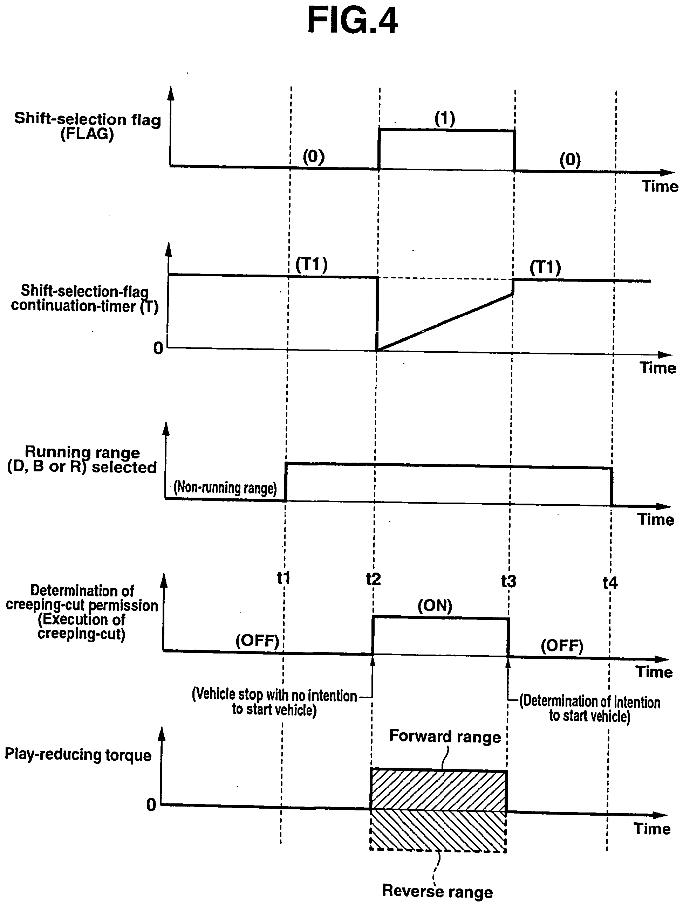

[FIG. 4] An operational time chart obtained by executing the play-reducing control program of FIG. 2, in a case that the shift range is changed from the non-running range to the running range before starting the creeping-cut, and then the shift range is changed from the running range back to the non-running range after the creeping-cut is finished.

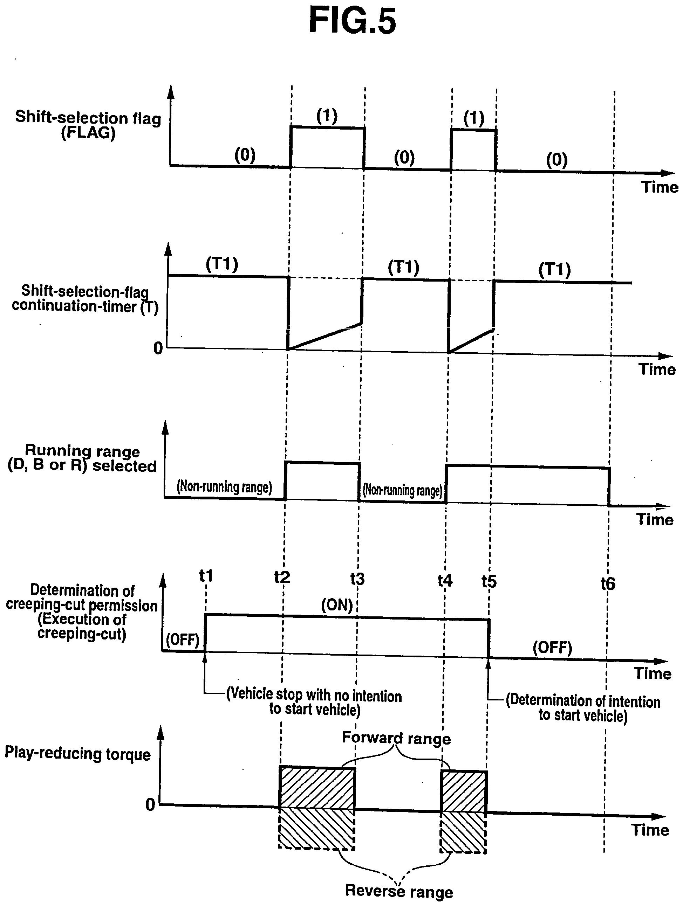

[FIG. 5] An operational time chart obtained by executing the play-reducing control program of FIG.2, in a case that the shift range is changed from the non-running range to the running range during the execution of creeping-cut, and the shift range is changed from the running range back to the non-running range, then secondly, the shift range is again changed from the non-running range to the running range, and the shift range is again changed from the running range back to the non-running range after the creeping-cut is finished.

### DETAILED DESCRIPTION OF INVENTION

Hereinafter, embodiments according to the present invention will be explained in detail referring to the drawings.

### <Configuration>

FIG. 1 is a view showing a drive system and a control system for the drive system in a vehicle equipped with a play-reducing control apparatus in an embodiment according to the present invention. The vehicle in this embodiment as shown in FIG. 1 is an electric-powered vehicle which can run by driving front left and right (road-)wheels 1L and 1R, or rear left and right (road-)wheels. These front left and right wheels 1L and 1R are driven by an electric motor (power source for running) 2 through a speed reducer 3 including a differential gear unit.

A battery 5 functions as an electric-power source. A motor controller 4 converts direct-current (DC) power of the battery 5 into alternate-current (AC) power by an inverter 6. This AC power is supplied to the electric motor 2 under a control of the inverter 6. Thereby, the electric motor 2 is controlled such that a torque of the electric motor 2 becomes equal to a calculation result (target motor-torque value) of the motor controller 4.

In a case that the calculation result (target motor-torque value) of the motor controller 4 is a creep torque responding to a creep running request of the vehicle, the motor controller 4 supplies a creep-torque-generating current to the electric motor 2 by use of the inverter 6. At this time, the electric motor 2 generates the creep torque, and transmits this creep torque through the speed reducer 3 to the left and right wheels 1L and 1R, so that the vehicle can run by creeping.

Moreover, in a case that the calculation result (target motor-torque value) of the motor controller 4 is a negative value for requiring the electric motor 2 to produce a regenerative braking, the motor controller 4 applies a power-generating load to the electric motor 2 by the inverter 6. At this time, electric power generated by the regenerative braking of the electric motor 2 is converted into direct-current (DC) power by AC-to-DC conversion of the inverter 6, and then is charged into the battery 5.

The motor controller 4 receives signals derived from a vehicle speed sensor 7, an accelerator opening sensor 8, an electric-current sensor 9, a range sensor 11 and a brake switch 12, as information for the above-mentioned calculation of the target motor-torque value. The vehicle speed sensor 7 senses a vehicle speed VSP which is a speed of the electrically-driven vehicle with respect to ground. The accelerator opening sensor 8 senses an accelerator opening APO (electric-motor-desired load) which is a depressed amount of accelerator pedal by a driver. The electric-current sensor 9 senses electric current (electric-current values iu, iv and iw of three-phase AC having U-phase, V-phase and W-phase in the case of FIG. 1) of the electric motor 2. The range sensor 11 senses which has been selected from a forward-running range (D-range, i.e., DRIVE-mode), a motor-speed limiting range (B-range, i.e., BRAKE-mode corresponding to Engine-brake mode in the case of automatic-transmission vehicle), a reverse running range (R-range, i.e., REVERSE-mode), a vehicle-stop range (N-range, i.e., NEUTRAL-mode) and a parking range (P-range, i.e., PARKING-mode), by a shift manipulation of the driver in order to produce a command for a running mode of the vehicle. That is, the range sensor 11 senses a currently-selected shift position. The brake switch 12 is turned on (becomes in ON-state) when braking is applied by depressing a brake pedal.

The motor controller 4 produces a PWM signal for controlling the electric motor 2 in accordance with the received information, and produces a drive signal for the inverter 6 by use of drive circuit in accordance with the PWM signal. The inverter 6 includes, for example, two switching elements (e.g., power semiconductor elements such as IGBTs) per each phase. The inverter 6 turns on/off the respective switching elements in accordance with the drive signal, and thereby converts direct current supplied from the battery 5 into alternating current or converts alternating current from the electric motor 2 into direct current. Thus, the inverter 6 supplies electric current corresponding to the target motor-torque value, to the electric motor2.

The electric motor 2 generates driving force according to the alternating current supplied from the inverter 6, and then transmits the driving force through the speed reducer 3 to the left and right wheels 1L and 1R. Moreover, when the electric motor 2 is dragged by the left and right wheels 1L and 1R during the vehicle running, i.e., at the time of so-called inverse drive, the electric motor 2 is given power-generating load so that the electric motor 2 performs the regenerative braking. Thereby, at this time, kinetic energy of the vehicle is regenerated and stored (charged) into the battery 5.

### <Play-reducing Control>

The motor controller 4 performs a play(looseness)-reducing control by executing a control program shown in FIG. 2. That is, the motor controller 4 calculates the target motor-torque values, and outputs commands thereof to the inverter 6, so that a drive control of the electric motor 2 is performed.

At step S11 of FIG. 2, it is judged whether or not a creeping-cut which makes the creep torque equal to 0 is in execution because a creeping-cut permitting condition has been satisfied. The creeping-cut permitting condition is constituted by two requirements that the brake switch 12 is in ON-state (= braking state) and that the vehicle speed VSP is indicating a stopped state of the vehicle. When both of the two requirements are satisfied, i.e. when the vehicle is in a stopped state including no intention to start moving the vehicle, the creeping-cut permitting condition is satisfied so that it is determined that the creeping-cut should be performed. On the other hand, the creeping-cut permitting condition is not satisfied, i.e., the creeping-cut is prohibited; when the driver weakens a pedal pressure of the brake pedal to turn off the brake switch 12, i.e., when it is determined that the driver has the intention to start moving the vehicle.

If it is determined that the creeping-cut is not in execution at step S11, the program proceeds to step S12 while a creep-running control or a normal-running control (not shown) is being carried out. At step S12, a shift-selection flag FLAG is reset to 0, and a shift-selection-flag continuation-timer T is set at a set time T1. Then, the program is ended. These shift-selection flag FLAG and shift-selection-flag continuation-timer T are used in an after-mentioned flow of the play-reducing control.

When it is determined that the creeping-cut is not in execution at step S11, the creep-running control or the normal-running control (not shown) is carried out as mentioned above. An outline of the creep-running control according to the present invention will now be explained. When the vehicle falls within a creep-running region in which the vehicle speed VSP is very iow and in which the accelerator opening APO is very low, and also when the creeping-cut permitting condition is not satisfied (=when the creeping-cut is prohibited); the motor controller 4 determines that the creep running is required. At this time, the motor controller 4 sets a target motor-torque value for the creep torque, and supplies the creep-torque-generating current through the inverter 6 to the electric motor 2. Thereby, the electric motor 2 generates the creep torque, and this creep torque is transmitted through the speed reducer 3 to the left and right wheels 1L and 1R so that the vehicle can run by creeping.

If it is determined that the creeping-cut which brings the creep torque to 0 is in execution by the satisfaction of the creeping-cut permitting condition at step S11, the program proceeds to S13. At step 513, it is judged whether the currently-selected shift range is one of the running ranges (D, B, R) or one of the non-running ranges (N, P). It is noted that steps S11 and S13 correspond to a creeping-cut running-range-selection detecting means according to the present invention.

If it is determined that one of the non-running ranges (N, P) is being selected at step S13, the play-reducing control is unnecessary and therefore the program proceeds to step S12. After the process of step S12 is executed, the program is ended.

If it is determined that one of the running ranges (D, B, R) is being selected at step S13, the program proceeds to step S14 so that the play-reducing control is performed as follows. At step S14, it is judged whether this routine is a first-time around or not since it started to be determined that the one of the running ranges (D, B, R) is being selected at step S13. Only in the case of first-time around, a process of step S15 is executed. At step S15, the shift-selection-flag continuation-timer T is reset to 0, and then, the program proceeds to step S16. As a matter of course, the process of step S14 determines the first-time around not only when the shift range has just changed from one of the non-running ranges (N, P) to one of the running ranges (D, B, R) but also when the shift range has just changed from one of the running ranges (D, B, R) to another of the running ranges (D, B, R) such as D→R and R→D. Except at the first-time around, the program proceeds from step S14 to step S16 without passing through step S15. Hence, the shift-selection-flag continuation-timer T can measure a time length elapsed from a timing when the process of step S11 determined that the creeping-cut is in execution because of the satisfaction of the creeping-cut permitting condition and also the process of step S13 firstly determined that one of the running ranges (D, B, R) is being selected.

At step S16, the shift-selection flag FLAG is set at 1. At subsequent step S17, the shift-selection-flag continuation-timer T is incremented to measure the elapsed time. At step S18, it is judged whether or not the shift-selection-flag continuation-timer T is smaller than the set time T1. That is, the process of step S18 judges whether or not the time length elapsed from the timing when the process of step S13 subsequent to step S11 firstly determined that one of the running ranges (D, B, R) is being selected is within the set time T1.

In the beginning, because a reiation T<T1 is satisfied, the program proceeds to step S19. At step S19, it is judged whether both of two requirements that the shift-selection flag FLAG indicates "1" and that the currently-selected shift range is any of the forward ranges (D, B) are satisfied or not. Moreover, at step S20, it is judged whether both of two requirements that the shift-selection flag FLAG indicates "1" and that the currently-selected shift range is any of the reverse ranges (R) are satisfied or not.

If it is determined that the both of two requirements that the shift-selection flag FLAG indicates "1" and that the currently-selected shift range is any of the forward ranges (D, B) are satisfied at step S19, a play-reducing torque for acting in a forward direction identical with a drive direction of the forward ranges (D, B) is outputted as the target motor torque to the invertor 6 at step S21. If it is determined that the both of two requirements that the shift-selection flag FLAG indicates "1" and that the currently-selected shift range is any of the reverse ranges (R) are satisfied at step S20, a play-reducing torque for acting in a reverse direction identical with a drive direction of the reverse range (R) is outputted as the target motor torque to the invertor 6 at step S22. It is noted that respective steps S21 and S22 correspond to an electric-motor control means according to the present invention.

If the both determinations of steps S19 and S20 are "NO", none of the processes of steps S21 and S22 are executed. That is, in this case, the target motor torque is maintained at 0 because of "in execution of the creeping-cut" of step S11, without outputting the play-reducing torque.

When it is determined that the shift-selection-flag continuation-timer T is greater than or equal to the set time T1 at step S18, i.e., when the time length elapsed from the timing when the process of step S13 subsequent to step S11 firstly determined that the one of the running ranges (D, B, R) is being selected becomes equal to the set time T1; the program proceeds to step S12. At step S12, the shift-selection flag FLAG is reset to 0, and the shift-selection-flag continuation-timer T is set at the set time T1.

### <Operations and Effects>

Representative operations and effects obtainable according to the play-reducing control of this embodiment as shown in FIG. 2 will now be explained in cases where the creeping-cut and the change of shift range are conducted as shown by time charts of FIGS. 3 to 5.

(1) FIG. 3 is an operational time chart in a case that the shift range is changed from the non-running range to the running range at a timing t2 during the creeping-cut which is executed from a timing t1 to a timing t4, and then, the shift range is changed from the running range to the non-running range at a timing t5 after the timing t4 at which the creeping-cut is finished.

At the timing t1, the creeping-cut starts to be performed, and the non-running range is being selected. At this time, the control program of FIG. 2 selects a loop including step S11, step S13 and step S12. Hence, the shift-selection flag FLAG is maintained at 0, and the shift-selection-flag continuation-timer T is maintained at the set time T1. Therefore, none of the processes of steps S21 and S22 are executed, so that the electric motor 2 does not output the play-reducing torque. However, a piay(iooseness)-reduction for a transfer system (powertrain) of the motor is not necessary because the non-running range is still being selected.

When the non-running range is changed into the running range at the timing t2 during the execution of creeping-cut which is executed from the timing t1 to the timing t4, the control program of FIG. 2 selects a loop including step S11, step S13, step S14, step S15, step S16, step S17, step S18, step S19 (or step S20) and step S21 (or step S22), at the first time around. Then (at the second time around or later), the control program of FIG. 2 selects a loop including step S11, step S13, step S16, step S17, step S18, step S19 (or step S20) and step S21 (or step S22).

Thereby, the shift-selection flag FLAG is set at 1 (step S16), and the shift-selection-flag continuation-timer T is reset to 0 (step S15). Then, the shift-selection-flag continuation-timer T is incremented (step S17) to measure the elapsed time from the timing t2.

If the currently-selected shift range is the forward range (i.e., one of the forward ranges), the process of step S21 is executed for a time period between the timing t2 and the timing t3 for which the shift-selection-flag continuation-timer T is smaller than the set time T1, because the shift-selection flag FLAG indicates 1 (FLAG = 1). As a result, the electric motor 2 outputs the play-reducing torque in a forwardly rotational direction as shown by a solid line of a bottom graph of FIG. 3. Thereby, the play-reduction of the motor transfer system can be realized.

If the currently-selected shift range is the reverse range (i.e., one of the reverse ranges), the process of step S22 is executed for the time period between the timing t2 and the timing t3 for which the shift-selection-flag continuation-timer T is smaller than the set time T1, because the shift-selection flag FLAG indicates 1. As a result, the electric motor 2 outputs the play-reducing torque in a reversely rotational direction as shown by a dotted line of the bottom graph of FIG. 3. Thereby, the play-reduction of the motor transfer system can be realized.

At the timing t3 at which the shift-selection-flag continuation-timer T becomes equal to the set time T1, the program proceeds from step S18 to step S12. At step S12, the shift-selection flag FLAG is reset at 0, and the shift-selection-flag continuation-timer T is set at the sel time T1, in preparation for a next play-reducing control.

Because the program proceeds from step S18 to step S12, the processes of the steps S21 and S22 are not executed after the time point t3. As a result, the electric motor 2 comes not to output the play-reducing torque. However, the play-reduction for the motor transfer system has already completed by the play-reducing torque outputted from the electric motor 2 for the set time T1 measured from the timing t2. Hence, after the timing t4, abnormal noise and shock can be prevented from occuring at the time of restart of the creep running or at the time of normal acceleration for starting to move the vehicle.

From the above-explained operations and effects, it is preferable that the play-reducing torque which is produced at step S21 or S22 of FIG. 2 is smaller than the creep torque. It is more preferable that the piay-reducing torque has a level minimum necessary to eliminate the play (looseness) of the transfer system (powertrain) of the electric motor 2, from a viewpoint of saving a power consumption of the electric motor 2.

Moreover, it is preferable that the set time T1 has a time value minimum necessary to eliminate the play of the transfer system of the electric motor 2 by use of the above level of play-reducing torque, from a viewpoint of saving the power consumption of the electric motor 2.

(2) FIG. 4 is an operational time chart in a case that the shift range is changed from the non-running range to the running range at a timing t1, and then the shift range is changed from the running range to the non-running range at a timing t4 after the creeping-cut is carried out for a period between a timing t2 and a timing t3.

Until the timing t2 at which the creeping-cut starts, the control program of FIG. 2 selects a loop including step S11 and step S12. Hence, the shift-selection flag FLAG is maintained at 0, and the shift-selection-flag continuation-timer T is maintained at the set time T1.

From the timing t2 at which the creeping-cut starts and the running range has already been selected, the control program of FIG. 2 selects a loop including step S11, step S13, step S14, step step S16, step S17, step S18, step S19 (or step S20), and step S21 (or step S22), at the first time around. Then (at the second time around or later), the control program of FIG. 2 selects a loop including step S11, step S13, step S16, step S17, step S18, step S19 (or step S20), and step S21 (or step S22).

Thereby, the shift-selection flag FLAG is set at 1 (step S16), and the shift-selection-flag continuation-timer T is reset (step S15). Then, the shift-selection-flag continuation-timer T is incremented (step S17) to measure the elapsed time from the timing T2.

If the current shift range is the forward range (i.e., one of the forward ranges), the process of step S21 is executed for a time period between the timing t2 and the timing t3 for which the shift-selection-flag continuation-timer T is smaller than the set time T1, because the shift-selection flag FLAG indicates 1 (FLAG = 1). As a result, the electric motor 2 outputs the play-reducing torque in the forwardly rotational direction as shown by a solid line of a bottom graph of FIG. 4. Thereby, the play-reduction of the motor transfer system can be performed.

If the current shift range is the reverse range (i.e., one of the reverse ranges), the process of step S22 is executed for the time period between the timing t2 and the timing t3 for which the shift-selection-flag continuation-timer T is smaller than the set time T1, because the shift-selection flag FLAG indicates 1. As a result, the electric motor 2 outputs the play-reducing torque in the reversely rotational direction as shown by a dotted line of the bottom graph of FIG. 4. Thereby, the play-reduction of the motor transfer system can be performed,

Before the shift-selection-flag continuation-timer T reaches the set time T1, the creeping-cut permitting condition comes not to be satisfied so that the creeping-cut is not performed at the timing t3. At this time, the program proceeds from step S11 to step S12. At step S12, the shift-selection flag FLAG is reset at 0, and the shift-seiection-fiag continuation-timer T is set at the set time T1, in preparation for a next play-reducing control.

Because the program proceeds from step S11 to step S12, the processes of the steps S21 and S22 are not executed after the time point t3. As a result, the electric motor 2 does not output the play-reducing torque after the time point t3. However, the play (looseness) for the motor transfer system has been sufficiently downsized (even if not completed) by the play-reducing torque outputted from the electric motor 2 for the period between the timing t2 and the timing t3 at which the creeping-cut was stopped. Hence, after the timing t3, abnormal noise and shock can be prevented from occurring at the time of restart of the creep running or at the time of normal acceleration for starting to move the vehicle.

Moreover, because a play-reducing-torque control for the electric motor 2 is changed into a creeping-cut end control (i.e., a creep-running restarting control or a normal vehicle-start accelerating control) immediately at the timing t3 at which the creeping-cut is stopped. Hence, the restart of the creep running or the normal acceleration for vehicle start can be prevented from being retarded.

(3) FIG. 5 is an operational time chart in a case that the shift range is changed from the non-running range to the running range at a timing t2 during the creeping-cut which is executed from a timing t1 to a timing t5, then the shift range is changed from the running range back to the non-running range at a timing t3, then the shift range is again changed from the non-running range to the running range at a timing t4, and then the shift range is changed from the running range back to the non-running range at a timing t6 after the timing t5 at which the creeping-cut comes not to be executed.

At the timing t1, the creeping-cut starts to be performed, and the non-running range is being selected. At this time, the control program of FIG. 2 selects a loop including step S11, step S13 and step S12. Hence, the shift-selection flag FLAG is maintained at 0, and the shift-selection-flag continuation-timer T is maintained at the set time T1. Therefore, none of the processes of steps S21 and S22 are executed, so that the electric motor 2 does not output the play-reducing torque. However, the play-reduction for the transfer system (powertrain) of the motor is not necessary because the non-running range is still being selected.

When the non-running range is changed into the running range at the timing t2 during the execution of creeping-cut which is executed from the timing t1 to the timing t5, the control program of FIG. 2 selects a loop including step S11, step S13, step S14, step S15, step S16, step S17, step S18, step S19 (or step S20), and step S21 (or step S22), at the first time around. Then (at the second time around or later), the control program of FIG. 2 selects a loop including step S11, step S13, step S16, step S17, step S18, step S19 (or step S20), and step S21 (or step S22).

Thereby, the shift-selection flag FLAG is set at 1 (step S16), and the shift-selection-flag continuation-timer T is reset to 0 (step S15). Then, the shift-selection-flag continuation-timer T is incremented (step S17) to measure the elapsed time from the timing t2.

If the currently-selected shift range is the forward range (i.e., one of the forward ranges), the process of step S21 is executed for a time period between the timing t2 and the timing t3 for which the shift-selection-flag continuation-timer T is smaller than the set time T1, because the shift-selection flag FLAG indicates 1 (FLAG = 1). As a result, the electric motor 2 outputs the play-reducing torque in the forwardly rotational direction as shown by a solid line of a bottom graph of FIG. 5. Thereby, the play-reduction of the motor transfer system can be realized.

If the currently-selected shift range is the reverse range (i.e., one of the reverse ranges), the process of step S22 is executed for the time period between the timing t2 and the timing t3 for which the shift-selection-flag continuation-timer T is smaller than the set time T1, because the shift-selection flag FLAG indicates 1. As a result, the electric motor 2 outputs the play-reducing torque in the reversely rotational direction as shown by a dotted line of the bottom graph of FIG. 5. Thereby, the play-reduction of the motor transfer system can be realized.

At the timing t3 at which the shift-selection-flag continuation-timer T is smaller than the set time T1, the shift range is returned from the running range to the non-running range. At this time, the program proceeds from step S13 to step S12. At step S12, the shift-selection flag FLAG is reset at 0, and the shift-selection-flag continuation-timer T is set at the set time T1, in preparation for a next play-reducing control.

Because the program proceeds from step S13 to step S12, the processes of the steps S21 and S22 are not executed after the time point t3. As a resuit, the electric motor 2 comes not to output the play-reducing torque. However, the play (looseness) for the motor transfer system has been downsized (even if not completed) by the play-reducing torque outputted from the electric motor 2 for the period between the timing t2 and the timing t3. Hence, after the timing t3, abnormal noise and shock can be prevented from occurring at the time of restart of the creep running or at the time of normal acceleration for vehicle start.

Moreover, because the play-reducing-torque control for the electric motor 2 is changed back to a creeping-cut control for the electric motor 2 immediately at the timing t3 at which the shift range is changed. Hence, the electric motor 2 can be prevented from outputting the play-reducing torque to waste electric power.

When the non-running range is again changed into the running range at the timing t4 during the execution of creeping-cut, the control program of FIG. 2 selects a loop including step S11, step S13, step S14, step S15, step S16, step S17, step S18, step S19 (or step S20), and step S21 (or step S22), at the first time around. At the second time around or later, the control program of FIG. 2 selects a loop including step S11, step S13, step S16, step S17, step S18, step S19 (or step S20), and step S21 (or step S22).

Thereby, the shift-selection flag FLAG is set at 1 (step S16), and the shift-selection-flag continuation-timer T is reset (step S15). Then, the shift-selection-flag continuation-timer T is incremented (step S17) to measure the elapsed time from the timing t4.

If the currently-selected shift range is the forward range, the process of step S21 is executed for a time period between the timing t4 and the timing t5 for which the shift-selection-flag continuation-timer T is smaller than the set time T1, because the shift-selection flag FLAG indicates 1 (FLAG = 1). As a result, the electric motor 2 outputs the play-reducing torque in the forwardly rotational direction as shown by the solid line of the bottom graph of FIG. 5. Thereby, the play-reduction of the motor transfer system can be realized.

If the currently-selected shift range is the reverse range, the process of step S22 is executed for the time period between the timing t4 and the timing t5 for which the shift-selection-flag continuation-timer T is smaller than the set time T1, because the shift-selection flag FLAG indicates 1. As a result, the electric motor 2 outputs the play-reducing torque in the reversely rotational direction as shown by the dotted line of the bottom graph of FIG. 5. Thereby, the play-reduction of the motor transfer system can be realized.

Before the shift-selection-flag continuation-timer T reaches the set time T1, the creeping-cut permitting condition comes not to be satisfied so that the creeping-cut is not performed at the timing t5. At this time, the program proceeds from step S11 to step S12. At step S12, the shift-selection flag FLAG is reset at 0, and the shift-selection-flag continuation-timer T is set at the set time T1, in preparation for a next play-reducing control.

Because the program proceeds from step S11 to step S12, the processes of the steps S21 and S22 are not executed after the time point t5. As a result, the electric motor 2 does not output the play-reducing torque after the time point t5. However, the play (looseness) for the motor transfer system has already become smaiier by the play-reducing torque outputted from the electric motor 2 for the period between the timing t4 and the timing t5 at which the creeping-cut permitting condition became unsatisfied. Hence, after the timing t5, abnormal noise and shock can be prevented from occurring at the time of restart of the creep running or at the time of normal acceleration for vehicle start.

Moreover, because the play-reducing-torque control for the electric motor 2 is changed into the creeping-cut end control (i.e., the creep-running restarting control or the normal vehicle-start accelerating control) immediately at the timing t5 at which the creeping-cut permitting condition becomes unsatisfied. Hence, the restart of the creep running or the normal acceleration of vehicle start can be prevented from being retarded.

### <Other Embodiments>

In the above embodiments, if the two requirements that the creeping-cut is currently being executed by the satisfaction of the creeping-cut permitting condition and that the running range is currently being selected are satisfied, the play-reducing torque is generated in the direction same as the drive direction of the current running range, regardless of whether the play is present or absence in the transfer system of the motor. However, a type of range changeover of current-time-around may be compared with a type of range changeover of last-time-around by memorizing the type of last-time-around range changeover. In this case, it can be judged whether or not the play in the direction same as the drive direction of the current running range exists in the motor transfer system. Thereby, the play-reducing torque can be generated in the direction same as the drive direction of the current running range only if the play exists in the direction same as the drive direction of the current running range.

In this case, unnecessary play-reducing torque is not generated if the play in the direction same as the drive direction of the current running range does not exist in the motor transfer system. Hence, as an advantageous effect, the power consumption can be further saved by that amount.

## Claims

1. A play-reducing control apparatus for an electrically-driven vehicle,
- wherein the electrically-driven vehicle is configured to run by transmitting power from an electric motor (2) to a road wheel (1L, 1R) in a motor transfer system in accordance with a shift range selected by a shift manipulation which is done by a driver to produce a running mode of the vehicle,
- wherein the electrically-driven vehicle is configured to creep at a very low speed by a creep torque derived from the electric motor (2),
- wherein the electrically-driven vehicle is configured to execute a creeping-cut such that the creep torque of the electric motor (2) is brought to zero when a predetermined creeping-cut permitting condition is satisfied,
- wherein the play-reducing control apparatus comprises:
- a judging means configured to judge whether or not the creeping-cut is in execution by a satisfaction of the creeping-cut permitting condition;
- a creeping-cut running-range-selection detecting means (4, S11, S13) configured to detect that the creeping-cut is in execution and also the selected shift range is a running range (D, B, R); and
- an electric-motor control means (4, S21, S22) configured to control the electric motor (2) such that the electric motor (2) outputs a torque in a drive direction of a current running range (D, B, R) to eliminate a play existing in the motor transfer system;
**characterized in**
- **that** the play-reducing control apparatus further comprises a means (4) configured:
- to memorize a type of last-time-around range changeover; and
- to judge whether or not a play in a direction same as the drive direction of the current running range (D, B, R) exists in the motor transfer system, by comparing a type of range changeover of current-time-around with the type of range changeover of last-time-around;
- **that** the electric-motor control means (4, S21, S22) is further configured to control, when it is judged that a play in the direction same as the drive direction of the current running range exists in the motor transfer system, the electric motor (2) such that the electric motor (2) outputs a first torque smaller than the creep torque in the drive direction of the current running range (D, B, R) for a limited period from a timing (t2) at which the creeping-cut running-range-selection detecting means (4, S11, S13) detects that the creeping-cut is in execution and also the current running range (D, B, R) is being selected;
- **that** the limited period is a shorter one of a set period (T1) and a period for which the current running range (D, B, R) is being selected during the satisfaction of the creeping-cut permitting condition; and
- **that** the set period (T1) is a time length minimum necessary to cause the first torque in the drive direction of the current running range (D, B, R) to eliminate a play existing in the motor transfer system ranging from the electric motor (2) to the road wheel (1L, 1R).

2. The play-reducing control apparatus according to claim 1,
wherein the first torque in the drive direction of the current running range (D, B, R) is a play-reducing torque having a level minimum necessary to eliminate a play existing in the motor transfer system ranging from the electric motor (2) to the road wheel (1L, 1R).

## Patentansprüche

1. Spielreduzierung-Steuervorrichtung für ein elektrisch angetriebenes Fahrzeug,
- wobei das elektrisch angetriebene Fahrzeug zum Fahren durch Übertragen von Strom von einem Elektromotor (2) zu einem Rad (1L, 1R) in einem Motorübertragungssystem gemäß einem durch eine Schaltbetätigung ausgewählten Schaltbereich, die durch einen Fahrer zum Erzeugen eines Fahrmodus des Fahrzeugs ausgeführt wird, konfiguriert ist,
- wobei das elektrisch angetriebene Fahrzeug zum Kriechen mit sehr geringer Geschwindigkeit durch ein von dem Elektromotor (2) abgeleitetes Kriechdrehmoment konfiguriert ist,
- wobei das elektrisch angetriebene Fahrzeug zum Ausführen einer Kriechreduzierung konfiguriert ist, sodass das Kriechdrehmoment des Elektromotors (2) auf Null gebracht wird, wenn eine vorbestimmte Kriechschnitt-Zulassungsbedingung erfüllt ist,
- wobei die Spielreduzierung-Steuervorrichtung umfasst:
- eine Beurteilungseinrichtung, die zum Beurteilen, ob die Kriechreduzierung durch Erfüllung der Kriechreduzierung-Zulassungsbedingung ausgeführt wird, oder nicht;
- eine Kriechreduzierung-Fahrbereichsauswahl-Erfassungseinrichtung (4, S11, S13), die zum Erfassen konfiguriert ist, dass die Kriechreduzierung ausgeführt wird und außerdem der ausgewählte Schaltbereich ein Fahrbereich (D, B, R) ist; und
- eine Elektromotor-Steuereinrichtung (4, S21, S22), die zum Steuern des Elektromotors (2) konfiguriert ist, sodass der Elektromotor (2) ein Drehmoment in einer Antriebsrichtung eines aktuellen Fahrbereichs (D, B, R) zum Beseitigen eines im Kraftübertragungssystem vorhandenen Spiels ausgibt;
**dadurch gekennzeichnet,**
- **dass** die Spielreduzierungs-Steuervorrichtung ferner eine Einrichtung (4) umfasst, die konfiguriert ist:
- zum Speichern einen Typs einer letztmaligen Bereichsumschaltung; und
- zum Beurteilen, ob ein Spiel in einer Richtung, die der Antriebsrichtung des aktuellen Fahrbereichs (D, B, R) entspricht, im Motorübertragungssystem vorliegt oder nicht, durch Vergleichen eines Typs der gegenwärtigen Bereichsumschaltung mit einem Typ der letztmaligen Bereichsumschaltung;
- **dass** die Elektromotor-Steuereinrichtung (4, S21, S22), wenn beurteilt wird, dass ein Spiel in der gleichen Richtung wie die Antriebsrichtung des aktuellen Fahrbereichs in dem Motorübertragungssystem vorliegt, ferner zum Steuern des Elektromotors (2) konfiguriert ist, sodass der Elektromotor (2) ein erstes Drehmoment, das kleiner als das Kriechdrehmoment in der Antriebsrichtung des aktuellen Fahrbereichs (D, B, R) ist, für eine begrenzte Zeitspanne ab einem Zeitpunkt (t2) abgibt, bei der die Kriechreduzierung-Fahrbereichsauswahl-Erfassungseinrichtung (4, S11, S13) erfasst, dass die Kriechreduzierung ausgeführt wird und außerdem der aktuelle Fahrbereich (D, B, R) ausgewählt ist;
- **dass** die begrenzte Zeitspanne eine kürzere aus einer festgelegten Zeitspanne (T1) und einer Zeitspanne ist, für die der aktuelle Fahrbereich (D, B, R) während der Erfüllung der Kriechreduzierung-Zulassungsbedingung ausgewählt ist; und
- **dass** die eingestellte Zeitspanne (T1) eine Zeitdauer ist, die mindestens zum Bewirken erforderlich ist, dass das erste Drehmoment in der Antriebsrichtung des aktuellen Fahrbereichs (D, B, R) ein im Motorübertragungssystem vorhandenes Spiel beseitigt, das vom Elektromotor (2) zum Rad (1L, 1R) reicht.

2. Spielreduzierung-Steuervorrichtung nach Anspruch 1,
wobei das erste Drehmoment in der Antriebsrichtung des aktuellen Fahrbereichs (D, B, R) ein spielreduzierendes Drehmoment mit einem Niveau ist, das zum Beseitigen eines im Motorübertragungssystem vorhandenen Spiels erforderlich ist, das vom Elektromotor (2) bis zum Rad (1L, 1R) reicht.

## Revendications

1. Appareil de commande de réduction de jeu pour un véhicule à commande électrique,
- dans lequel le véhicule à commande électrique est configuré pour rouler en transmettant de l'énergie d'un moteur électrique (2) à une roue de route (1L, 1R) dans un système de transfert de moteur selon une plage de changement de vitesse sélectionnée par une manipulation de changement de vitesse qui est effectuée par un conducteur pour produire un mode marche du véhicule,
- dans lequel le véhicule à commande électrique est configuré pour marcher lentement à très faible vitesse par un couple de marche lente dérivé du moteur électrique (2),
- dans lequel le véhicule à commande électrique est configuré pour exécuter une coupure de marche lente de sorte que le couple de marche lente du moteur électrique (2) soit amené à zéro lorsqu'une condition d'autorisation de coupure de marche lente prédéterminée est satisfaite,
- dans lequel l'appareil de commande de réduction de jeu comprend :
- un moyen de jugement configuré pour juger si la coupure de marche lente est en cours d'exécution ou non par une satisfaction de la condition d'autorisation de coupure de marche lente ;
- un moyen de détection de sélection de plage de marche de coupure de marche lente (4, S11, S13) configuré pour détecter que la coupure de marche lente est en cours d'exécution et également la plage de changement de vitesse sélectionnée est une plage de marche (D, B, R) ; et
- un moyen de commande de moteur électrique (4, S21, S22) configuré pour commander le moteur électrique (2) de sorte que le moteur électrique (2) délivre en sortie un couple dans une direction de conduite d'une plage de marche actuelle (D, B, R) pour éliminer un jeu existant dans le système de transfert de moteur ;
**caractérisé en ce que**
- l'appareil de commande de réduction de jeu comprend en outre un moyen (4) configuré :
- pour mémoriser un type de changement de plage de la dernière fois ; et
- pour juger si un jeu dans la même direction que la direction de conduite de la plage de marche actuelle (D, B, R) existe ou non dans le système de transfert de moteur, en comparant un type de changement de plage du temps actuel au type de changement de plage de la dernière fois ;
- le moyen de commande de moteur électrique (4, S21, S22) est en outre configuré pour commander, lorsqu'il est jugé qu'un jeu dans la même direction que la direction de conduite de la plage de marche actuelle existe dans le système de transfert de moteur, le moteur électrique (2) de sorte que le moteur électrique (2) délivre en sortie un premier couple inférieur au couple de marche lente dans la direction de conduite de la plage de marche actuelle (D, B, R) pendant une période limitée à partir d'un moment (t2) auquel le moyen de détection de sélection de plage de marche de coupure de marche lente (4, S11, S13) détecte que la coupure de marche lente est en cours d'exécution et également la plage de marche actuelle (D, B, R) est sélectionnée ;
- la période limitée est la plus courte d'une période définie (T1) et d'une période pendant laquelle la plage de marche actuelle (D, B, R) est sélectionnée pendant la satisfaction de la condition d'autorisation de coupure de marche lente ; et
- la période définie (T1) est une durée minimale nécessaire pour amener le premier couple dans la direction de conduite de la plage de marche actuelle (D, B, R) à éliminer un jeu existant dans le système de transfert de moteur allant du moteur électrique (2) à la roue de route (1L, 1R).

2. Appareil de commande de réduction de jeu selon la revendication 1, dans lequel le premier couple dans la direction de conduite de la plage de marche actuelle (D, B, R) est un couple de réduction de jeu ayant un niveau minimal nécessaire pour éliminer un jeu existant dans le système de transfert de moteur allant du moteur électrique (2) à la roue de route (1L, 1R).
